# DEMANDE DE BREVET EUROPEEN

(11) **EP 1 298 016 A1**
(43) Date de publication de la demande: **02.04.2003**
(21) Numéro de dépôt: 02292345.2
(22) Date de dépôt: 25.09.2002
(51) Int. Cl.: B60R 21/26, F42B 3/04

(54) **Boîtier pour une composition génératrice de gaz**

(30) Priorité: 28.09.2001 FR 0112487
(71) Demandeur: SPRIA, 65009 Tarbes (FR)
(72) Inventeur: Guillaud Foglieni, Nathalie, 65000 Tarbes (FR)
(74) Mandataire: Célanie, Christian

(57) **Abrégé**

L'invention a pour objet un boîtier (1) destiné à renfermer une composition génératrice de gaz, boîtier comportant un étui (2) présentant une paroi latérale (2a) et un fond (2b), étui fermé par un couvercle (3).

Ce boîtier est caractérisé en ce que l'étui (2) est réalisé en matière plastique ou composite et en ce que le couvercle (3) est rendu solidaire de l'étui par au moins deux tirants (4a,4b) disposés dans l'épaisseur d'une paroi (2a) de l'étui et s'étendant sur toute la hauteur de celui-ci, chaque tirant étant lié au couvercle (3) par un moyen de fixation.

## Description

Le domaine technique de l'invention est celui des boîtiers pour générateurs de gaz et notamment des boîtiers pour générateurs de gaz utilisés dans les systèmes de sécurité automobiles.

Les boîtiers connus sont généralement des boîtiers lourds et coûteux réalisés en métal. Ces boîtiers doivent assurer la conservation d'une composition pyrotechnique génératrice de gaz à l'abri de l'humidité. Ils doivent également pouvoir résister à la température de combustion de cette dernière et permettre la fixation du boîtier, par exemple sur le véhicule.

C'est le but de l'invention que de proposer un boîtier pour composition génératrice de gaz qui soit léger, étanche, résistant et peu coûteux. Ce boîtier doit également être facile à assembler puis à installer sur un véhicule.

Ainsi l'invention a pour objet un boîtier destiné à renfermer une composition génératrice de gaz, boîtier comportant un étui présentant une paroi latérale et un fond, étui fermé par un couvercle, boîtier caractérisé en ce que l'étui est réalisé en matière plastique ou composite et en ce que le couvercle est rendu solidaire de l'étui par au moins deux tirants disposés dans l'épaisseur d'une paroi de l'étui et s'étendant sur toute la hauteur de celui-ci, chaque tirant étant lié au couvercle par un moyen de fixation.

Selon un mode particulier de réalisation, le moyen de fixation est formé par un sertissage d'une extrémité du tirant sur le couvercle.

Les tirants pourront comporter avantageusement au moins une partie moletée permettant de les rendre solidaires de l'étui.

Le boîtier pourra comporter une bride de fixation en métal qui sera rendue solidaire de l'étui par les tirants.

Avantageusement la bride pourra couvrir le fond de l'étui.

Le fond de l'étui pourra comporter au moins un alésage sur lequel sera fixé un support pour un initiateur.

Le support d'initiateur pourra être rendu solidaire du fond de l'étui par déformation.

Selon une autre caractéristique de l'invention, le boîtier pourra comporter un déflecteur cylindrique percé de trous qui coiffera le support d'initiateur et s'étendra axialement jusqu'au couvercle de l'étui.

Le déflecteur pourra être centré dans un lamage aménagé sur le couvercle.

L'étui sera réalisé de préférence en une matière plastique incorporant 20 à 30% en masse d'une charge.

L'invention sera mieux comprise à la lecture de la description qui va suivre de modes particuliers de réalisation, description faite en référence aux dessins annexés et dans lesquels :
- la figure 1 est une vue extérieure en perspective d'un boîtier selon l'invention partiellement assemblé,
- la figure 2 est une vue en perspective arrière de ce boîtier,

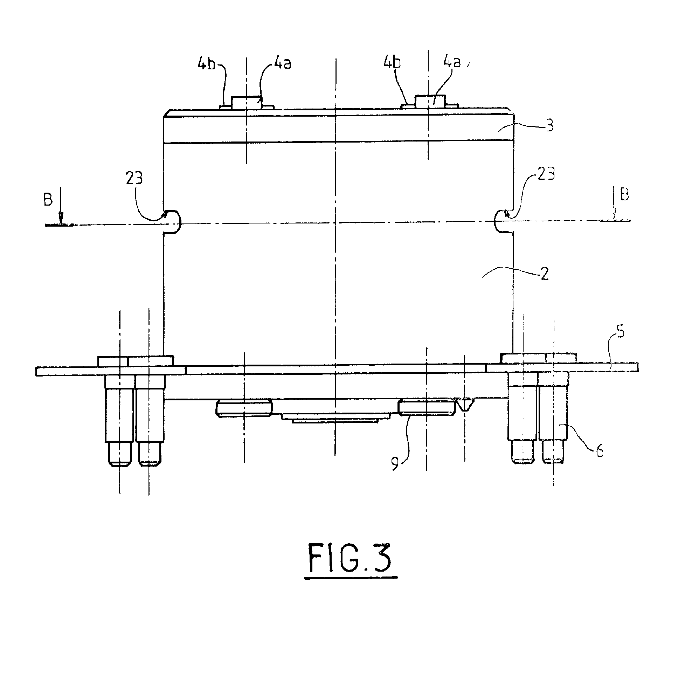

- la figure 3 est une vue latérale externe du boîtier,
- la figure 4 est une vue en coupe longitudinale du boîtier selon l'invention, la coupe étant réalisé suivant le plan dont la trace AA est repérée sur la figure 2,
- la figure 5 est une section du boîtier selon le plan dont la trace BB est repérée sur la figure 3.

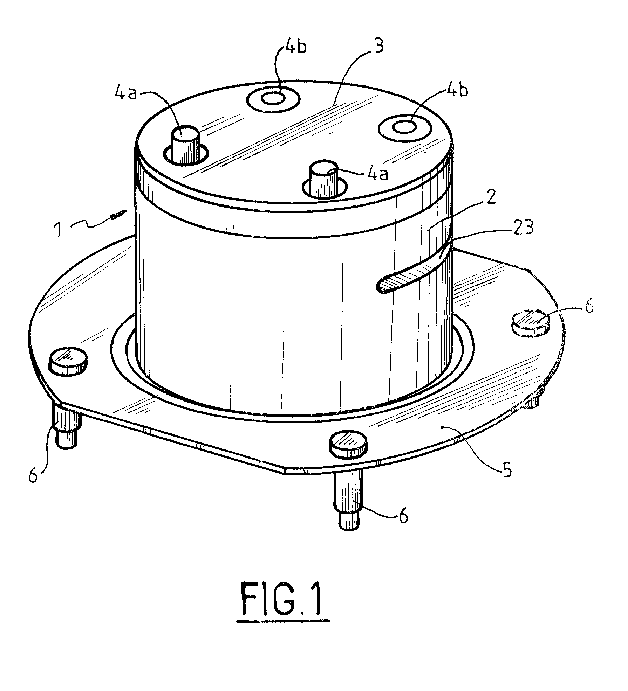

En se reportant à la figure 1, un boîtier 1 selon l'invention est représenté partiellement assemblé. Ce boîtier comprend un étui 2 globalement cylindrique réalisé en matière plastique ou composite et un couvercle 3 réalisé lui aussi en matière plastique ou bien en un métal léger tel qu'un alliage d'aluminium.

Le couvercle 3 est rendu solidaire du corps 2 par un moyen de fixation constitué par quatre tirants métalliques 4a, 4b qui traversent le corps et qui se trouvent sertis sur le couvercle 3 au niveau de leur extrémité.

Sur cette figure le montage du boîtier est partiel, ainsi deux tirants 4a sont représentés avant sertissage et les deux autres tirants 4b sont représentés après sertissage. Le sertissage réalisé est un sertissage gyroscopique bien connu de l'homme du métier. Un tel sertissage permet d'obtenir sur les extrémités des tirants une partie aplatie présentant une symétrie de révolution et assurant ainsi un serrage reproductible du tirant sur le couvercle.

Un chanfrein conique 11 sera de préférence aménagé dans chaque trou du couvercle pour permettre l'expansion de la matière du tirant 4. On améliore ainsi la tenue mécanique de la liaison et on assure son étanchéité.

Le boîtier comporte également une bride 5 métallique qui permet sa fixation, par exemple sur un véhicule. A cet effet, cette bride porte quatre vis 6, soudées ou serties.

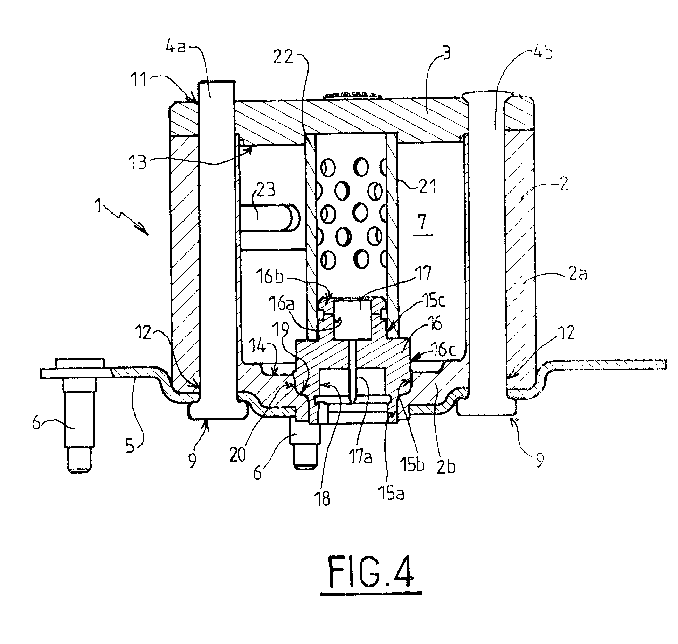

La structure du boîtier 1 est plus particulièrement visible sur la figure 4.

L'étui 2 présente une paroi latérale 2a cylindrique formant une seule pièce avec un fond 2b. Il délimite avec un déflecteur cylindrique 21 un logement interne annulaire 7 à l'intérieur duquel est disposée une composition pyrotechnique génératrice de gaz (non représentée).

Cet étui est réalisé en une matière plastique ou composite susceptible de résister au moins pendant le temps de fonctionnement du générateur (de l'ordre de 200 à 500 millisecondes) à la chaleur dégagée par la composition pyrotechnique (température de réaction de l'ordre de 700°C à 1000°C).

On pourra par exemple réaliser l'étui en un polymère incorporant 20 à 30% en masse d'une charge minérale, par exemple de fibres ou billes de verre ou de carbone. Le boîtier sera de préférence réalisé par injection.

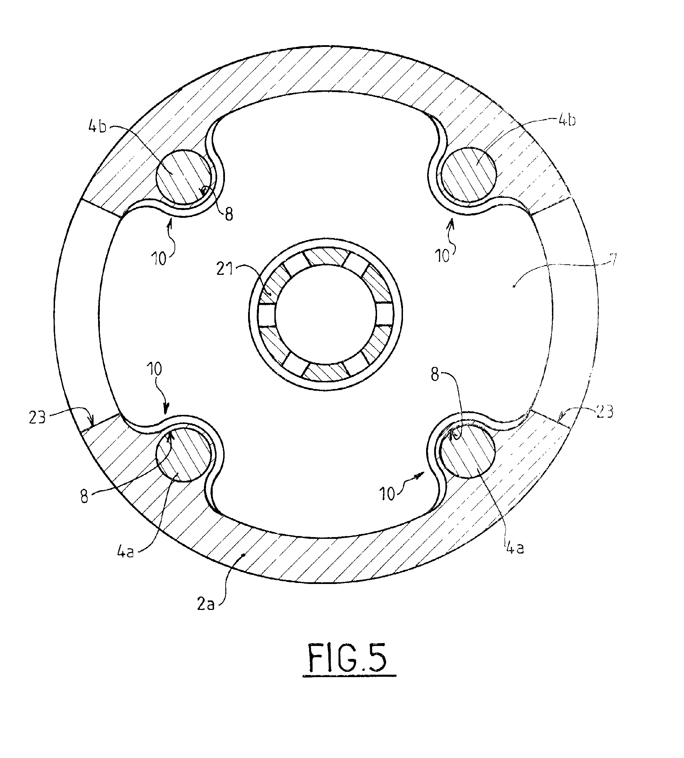

Comme cela est visible sur la figure 4 ainsi que sur la figure 5, les tirants 4a, 4b sont disposés dans des logements cylindriques 8 aménagés dans l'épaisseur de la paroi 2a de l'étui 2. Ces tirants s'étendent ainsi sur toute la hauteur de l'étui 2 et ne pénètrent pas à l'intérieur du logement 7.

Le moyen de fixation du couvercle sur l'étui ne nuit donc pas à l'étanchéité du boîtier.

Par ailleurs les logements 8 des tirants sont réalisés au niveau de renflements 10 de la paroi 2a de l'étui. Les renflements et les tirants qu'ils renferment accroissent la rigidité mécanique de l'étui.

Chaque tirant 4a,4b comporte une tête élargie 9 qui prend appui sur la bride 5. Ainsi la seule opération de sertissage des tirants 4a,4b assure à la fois la solidarisation du couvercle 3 et de l'étui 2 ainsi que celle de la bride métallique 5 avec l'étui 2. Le montage du boîtier se trouve donc extrêmement simplifié.

Les tirants 4a, 4b comportent également une partie cylindrique moletée 12 qui pénètre dans le matériau de l'étui au niveau du fond 2b. Une telle disposition assure une solidarisation des tirants avec l'étui au cours des phases d'assemblage avant le sertissage.

Elle permet également le sertissage gyroscopique des tirants en assurant leur immobilisation en rotation.

Le couvercle 3 présente un prolongement cylindrique qui vient s'ajuster dans le logement 7 de l'étui. Ce prolongement assure un centrage du couvercle 3 par rapport à l'étui 2 et il permet aussi d'assurer l'étanchéité du logement interne 7. A cet effet l'ajustement pourra avantageusement être légèrement serré, le rebord externe du prolongement formant une lèvre d'étanchéité. Alternativement un jeu annulaire pourra subsister (comme sur la figure 4) pour permettre la mise en place d'un joint torique (non représenté).

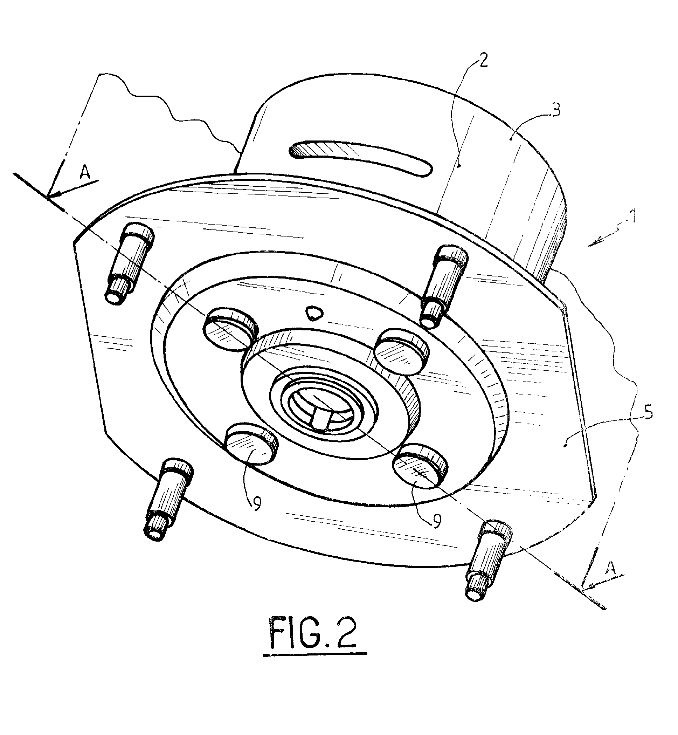

Comme cela est plus particulièrement visible sur les figures 2 et 4, la bride 5 est réalisée sous la forme d'une tôle métallique emboutie qui recouvre sensiblement tout le fond 2b de l'étui 2. Une telle disposition améliore la tenue mécanique de l'étui.

Le fond 2b du boîtier 2 présente une cuvette 14 disposée à l'intérieur du logement 7 et présentant un premier alésage axial 15a précédé d'un deuxième alésage 15b de diamètre supérieur, formant ainsi un lamage 19 constituant une surface d'appui pour un support 16.

Ce dernier est avantageusement réalisé en matière plastique. Il est destiné à recevoir un initiateur 17 (non représenté en détails). L'initiateur 17 se positionne dans un alésage 16a du support dans lequel il est immobilisé par un couvercle 16b collé au support 16.

Les broches 17a de l'initiateur sortent du support 16 pour venir se positionner dans un logement 18 destiné à recevoir un connecteur électrique (non représenté).

Le support d'initiateur comporte une surface cylindrique externe 16c sur laquelle sont aménagées des dents circulaires 20. Ces dents coopèrent avec la surface cylindrique interne du deuxième alésage 15b pour assurer la solidarisation du support 16 et du fond 2b de l'étui 2.

La liaison est ainsi assurée par la simple déformation relative des dents 20 et de l'alésage 15b. On pourrait bien entendu réaliser un autre type de liaison : par filetage, collage, soudure aux ultrasons...

Un déflecteur cylindrique 21 percé de trous est interposé entre le support d'initiateur et le couvercle 3 de l'étui 2. Ce déflecteur est ajusté sur une partie cylindrique 15c du support 16. Le déflecteur 21 est également centré dans un lamage 22 aménagé sur la face intérieure du couvercle 3.

Le déflecteur 21 est avantageusement réalisé en métal, par exemple en acier ou en alliage d'aluminium.

Le déflecteur 21 contient une composition pyrotechnique d'allumage (non représentée), de telles compositions sont bien connues de l'Homme du Métier. La composition d'allumage est elle même allumée par l'initiateur 17. Ce déflecteur 21 a pour fonction de diffuser et répartir radialement de façon homogène les flammes issues de la composition d'allumage.

On évite ainsi les pics de pression et on maîtrise mieux l'allumage de la composition génératrice de gaz qui est disposée dans le logement annulaire 7, à l'extérieur du déflecteur 21.

La paroi cylindrique 2a de l'étui 2 comporte enfin deux fentes 23, symétriques l'une de l'autre par rapport à l'axe du boîtier. Ces fentes sont destinées à laisser sortir les gaz à l'extérieur du boîtier 1. Pour assurer l'étanchéité notamment lors des phases de stockage, chaque fente 23 est obturée à l'aide d'une fine feuille de métal ou de matière plastique collée à la surface cylindrique interne de l'étui 2 (feuilles non représentées).

## Revendications

1. Boîtier (1) destiné à renfermer une composition génératrice de gaz, boîtier comportant un étui (2) présentant une paroi latérale (2a) et un fond (2b), étui fermé par un couvercle (3), boîtier ***caractérisé en ce que*** l'étui (2) est réalisé en matière plastique ou composite et **en ce que** le couvercle (3) est rendu solidaire de l'étui par au moins deux tirants (4a,4b) disposés dans l'épaisseur d'une paroi (2a) de l'étui (2) et s'étendant sur toute la hauteur de celui-ci, chaque tirant (4a,4b) étant lié au couvercle (3) par un moyen de fixation.

2. Boîtier selon la revendication 1, **caractérisé en ce que** le moyen de fixation est formé par un sertissage d'une extrémité du tirant (4a, 4b) sur le couvercle (3).

3. Boîtier selon une des revendications 1 ou 2, **caractérisé en ce que** les tirants (4a,4b) comportent au moins une partie moletée (12) permettant de les rendre solidaires de l'étui (2).

4. Boîtier selon une des revendications 1 à 3, **caractérisé en ce qu'**il comporte une bride (5) de fixation en métal qui est rendue solidaire de l'étui (2) par les tirants (4a,4b).

5. Boîtier selon la revendication 4, **caractérisé en ce que** la bride (5) couvre le fond (2b) de l'étui.

6. Boîtier selon une des revendications 1 à 5, **caractérisé en ce que** le fond (2b) de l'étui comporte au moins un alésage (15a,15b) sur lequel est fixé un support (16) pour un initiateur (15).

7. Boîtier selon la revendication 6, **caractérisé en ce que** le support (16) d'initiateur est rendu solidaire du fond (2b) de l'étui par déformation.

8. Boîtier selon une des revendications 6 ou 7, **caractérisé en ce qu'**il comporte un déflecteur cylindrique (21) percé de trous qui coiffe le support (16) d'initiateur et s'étend axialement jusqu'au couvercle (3) de l'étui.

9. Boîtier selon la revendication 8, **caractérisé en ce que** le déflecteur (21) est centré dans un lamage (22) aménagé sur le couvercle.

10. Boîtier selon une des revendications 1 à 9, **caractérisé en ce que** l'étui (2) est réalisé en une matière plastique incorporant 20 à 30% en masse d'une charge.
